# EUROPEAN PATENT APPLICATION

(11) **EP 0 573 246 A2**
(43) Date of publication of application: **08.12.1993**
(21) Application number: 93304228.5
(22) Date of filing: 01.06.1993
(51) Int. Cl.: H04N 9/83, H04N 9/79

(54) **A magnetic recording/reproducing apparatus for recording and reproducing a video signal added with a helper signal**

(30) Priority: 05.06.1992 JP 145291/92
(71) Applicant: MATSUSHITA ELECTRIC INDUSTRIAL CO., LTD., Kadoma-shi, Osaka-fu 571 (JP)
(72) Inventor: Okayama, Mutsuyuki, Kobe-shi, Hyogo-ken 657 (JP); Hamamoto, Yasuo, Higashiosaka-shi, Osaka-fu 577 (JP); Morioka, Yoshihiro, Neyagawa-shi, Osaka 572 (JP)
(74) Representative: Crawford, Andrew Birkby

(57) **Abstract**

A VCR separates a TV signal carrying a helper content into a helper signal and a PAL or SECAM signal for record and reproduction. The helper signal is frequency modulated or digitized for overlap recording through a separate magnetic head onto a part or all of a recording track where the conventional color video signal is stored.

## Description

### BACKGROUND OF THE INVENTION

### 1.Field of the Invention

The present invention relates to a video taperecorder (referred to as a VCR hereinafter) for recording and reproducing a color video signal of PAL, SECAM, or High-definition television system.

### 2.Description of the Prior Art

A variety of home VCRs are widely used for recording and reproducing a color video signal of VHS or 8-mm format. Particularly, the VCRs of VHS format now prevail over 250 million units throughout the world, becoming a must item in every home. The VCR separates an input PAL or SECAM color video signal into a luminance component and a chrominance carrier component. The luminance signal is frequency modulated using a lowband carrier and the chrominance carrier signal is lowband converted before recorded onto a magnetic tape. Such recording/reproducing methods are depicted in, for example, Yokoyama's "Home video techniques" published by NHK(the Japanese Broadcasting Corporation) and Sugetani's study in "SMPTE Journal", March 1986, pp.301 to 309.

Also, we, the applicants, have introduced some methods of overlap recording a high-quality audio signal onto a video signal, for example, shown in Japanese Patent Application No.61-93749 (titled "Magnetic recording/reproducing method") filed on April 23, 1986.

Such conventional VCRs are however incapable of recording a combination video signal, e.g. PALplus, containing a PAL or SECAM video information and a helper (a vertical highband component of the luminance signal) in the foregoing manner. The helper signal of the PALplus signal is modulated with a color subcarrier and will thus be recorded with effects of color-under by a conventional VCR suffering a reduction in the bandwidth.

### SUMMARY OF THE INVENTION

It is an object of the present invention to provide an improved VHS-format VCR capable of recording a PALplus signal along with a common PAL or SECAM video signal and reproducing them selectively.

For achievement of the above object, the present invention allows an helper signal (or an augmentation signal) separated from the PALplus signal to be frequency modulated or digitized for overlap recording onto a part or all of the recording track where a conventional color video signal is stored. Also, two discrete output terminals are provided for delivering a PALplus composite reproduction signal and a PAL or SECAM video reproduction signal respectively. Accordingly, the VCR of the present invention becomes compatible with any conventional VCR.

More specifically, the PALplus signal can be recorded with its helper component separately of the PAL or SECAM components. A magnetic recording tape carrying the signals recorded by the VCR of the present invention will thus be reproduced by a conventional VCR for reproduction of the PAL or SECAM components. Also, when it is displayed on a conventional TV receiver, the helper signal will appear as two, upper and lower, black portions of the screen.

### BRIEF DESCRIPTION OF THE DRAWINGS

Fig. 1 is a block diagram showing the primary part of a first embodiment of the present invention;
Fig. 2 is a diagram showing a pattern of recording tracks of the first embodiment of the present invention;
Fig. 3 is a cross sectional view of a magnetic recording tape explaining the signal recording of the first embodiment of the present invention;
Fig. 4 is a diagram showing frequency spectrums of the first embodiment of the present invention;
Fig. 5 is a block diagram of a digital recording signal processor circuit of the first embodiment of the present invention;
Fig. 6 is a block diagram of a digital reproduced signal processor circuit of the first embodiment of the present invention;
Fig. 7 is a view of a picture reproduced by the first embodiment of the present invention; and
Fig. 8 is a block diagram showing the primary part of a second embodiment of the present invention.

### DESCRIPTION OF THE PREFERRED EMBODIMENTS

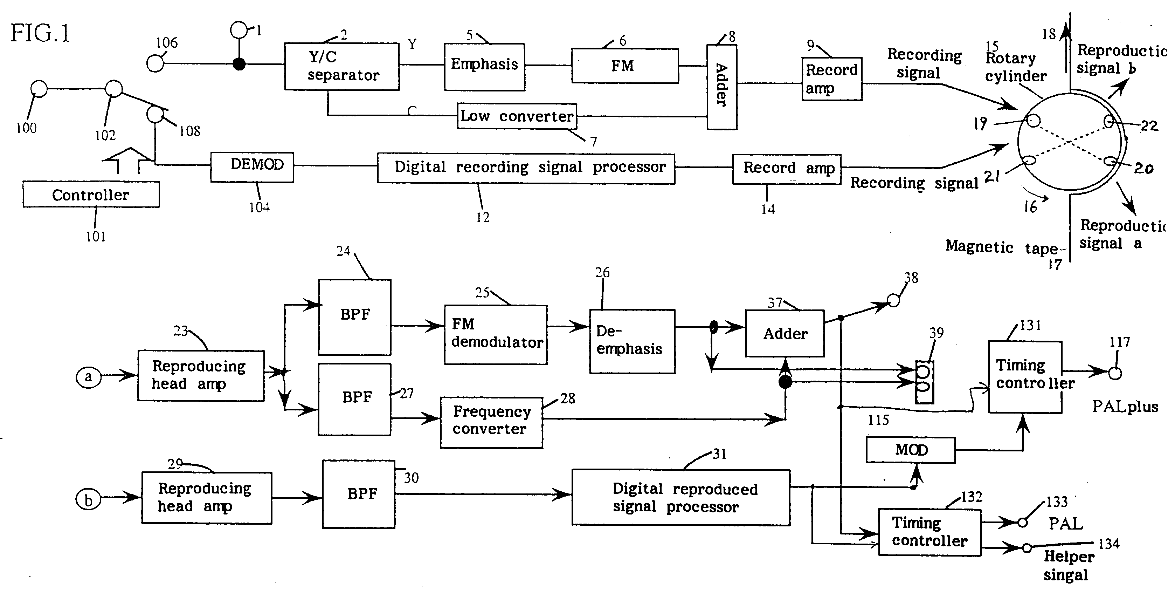

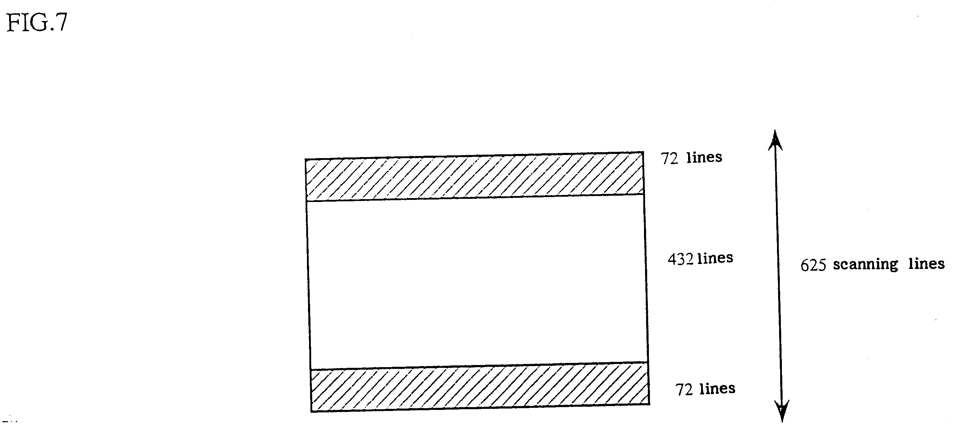

A first embodiment of the present invention will be described referring to the accompanying drawings. Fig. 1 is a block diagram showing a primary part of the first embodiment. As shown, there is provided a second input terminal 100 to which a second color video or PALplus signal is introduced. The PALplus signal is divided into a helper signal and the other components by the action of a controller 101 and a selector switch 102. This will be explained in more detail referring to Fig. 7. Fig. 7 illustrates a screen image created by the video signal of the first embodiment in which the hatching areas represent the helper signal timebase multiplexed in the vertical period. More specifically, the selector switch 102 is connected to a contact 108 for the first duration, 72/625x1/50=0.002304 seconds, of the vertical period of 1/50=0.02 seconds, after the start of effective line scanning (in a picture display), to a contact 106 for 432/625x1/50= 0.013824 seconds, to the contact 108 for 72/625x1/50= 0.002304 seconds, and to the contact 106 for the last 49/625x1/50=0.001568 seconds. This switching action of the selector switch 102 is controlled by a controller 101 which may contain a ROM. The helper signal is fed to the contact 108 while the other components are supplied to the contact 106.

Also, a composite video signal of the PAl or SECAM system is fed through a first input terminal 1 to a Y/C separator circuit 2 where it is divided into a luminance signal Y and a carrier chrominance signal C.

The luminance signal Y from the Y/C separator circuit 2 is linearly or nonlinearly emphasized by an emphasizer circuit 5 and then, frequency modulated by an FM modulator circuit 6. The carrier chrominance signal C from the Y/C separator circuit 2 is transmitted to a lowband converter circuit 7 where its frequency is converted to a lower frequency than that of the frequency modulated luminance signal Y. The output of the lowband converter circuit 7 is then added by an adder circuit 8 to the frequency modulated luminance signal Y and a resultant sum signal is transferred to a recording amplifier 9.

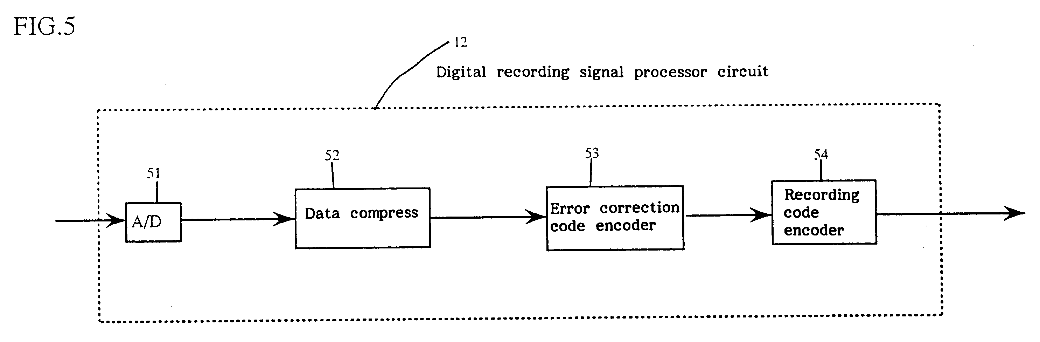

The helper signal of the PALplus input fed from the selector switch 102 to the contact 108 is demodulated and converted to a baseband helper signal by a demodulator circuit (DEMOD) 104, and is then sent to a digital recording signal processor circuit 12. In the digital recording signal processor circuit 12, the baseband helper signal is digitized and encoded to a digital modulation code form which is then fed to a recording amplifier 14. The arrangement of the digital recording signal processor circuit 12 will be explained in more detail referring to Fig. 5. As shown, there are provided an analog-to-digital converter 51, a data compressing circuit 52, an error correcting code encoding circuit 53, and a recording code encoding circuit 54. The signal from the demodulator circuit 104 is converted by the analog-to-digital (A/D) converter 51 to its digital signal. The digital signal of the analog-to-digital converter 51 is fed to the data compressing circuit 52 where its information is compressed by e.g. DCT or DPCM compression-technique. The DCT and DPCM compression techniques are well known and their details will be acquired from "Systematic image encoding" supervised by Miyahara, published IPC in 1990, or other literature. The output of the data compressing circuit 52 is fed to the error correcting code encoding circuit 53 for addition of an error correcting parity symbol such as a Reed-Solomon product code. The error correcting codes including the Reed-Solomon product code are explained in more details in e.g. "Coding theorem" written by Imai, published by Corona in 1990. The output of the error correcting code encoding circuit 53 is encoded by the recording code encoding circuit 54 to a modulation code of carrier signal, e.g. QPSK, which is then transferred to the recording amplifier 14. The modulation codes of carrier signal including QPSK are described in details in e.g. "Digital micro-wave communications" written by Kuwabara, published by Kikaku Center in 1984.

Fig. 1 also illustrates a rotary cylinder 15, of which rotating direction is denoted by 16, a magnetic tape 17, of which running direction is denoted by 18, and four magnetic heads 19,20,21,22 which are different in the azimuth angle. The magnetic tape 17 is wound on the rotary cylinder 15 through 180 degrees. The four magnetic heads 19,20,21,22 are helical-scan VCR transducers for helical scanning the magnetic tape 17.

The output of the recording amplifier 9 is distributed through a known rotary transformer to the two heads 19 and 20 which are distanced about 180 degrees from each other on the circumference of the rotary cylinder 15 and recorded on a first recording track of the magnetic tape 17. Similarly, the output of the recording amplifier 14 is distributed through a known rotary transformer to the two heads 21 and 22 which are distanced about 180 degrees from each other on the circumference of the rotary cylinder 15 and recorded on a second recording track of the magnetic tape 17.

Here, the output of the recording amplifier 9 is set to be at a particular or saturated recording level such that the recording currents of the heads 19,20 can allow a maximum of the output to be reproduced from the magnetic tape. On the other hand, the output of the recording amplifier 14 is set to be a lower or unsaturated recording level than said maximum level which permits the recording currents of the heads 21,22 to produce substantially a peak of the reproduction from the magnetic tape. Since the level of the second recording signals of the two heads 21,22, the second recording signals will hardly affect and interrupt the first recording signal on the magnetic tape when overlapping it during the recording. Accordingly, the second signal can be recorded without erasing most of the first signals stored on the magnetic tape.

The first embodiment of the present invention allows the helper signal of the PALplus signal to be recorded and reproduced while the recording and reproduction of the conventional frequency modulated luminance signal and the lowband converted chrominance signal being carried out at the same station.

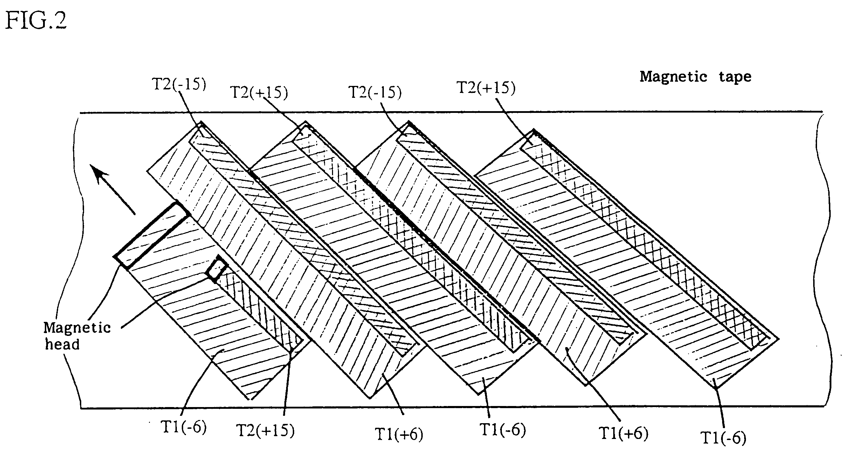

Fig. 2 shows a pattern of the recording tracks. The two magnetic heads 19 and 21 are arranged at the azimuth angles of +6° and -15° respectively. Also, the magnetic heads 20 and 22 are mounted at the azimuth angles of -6° and +15° respectively. Any two opposite heads arranged 180 degrees apart on the cylinder 15 have reverse azimuth angles to each other. As shown in Fig. 2, denoted by Tl(+6) and T1(-6) are recording tracks scanned by their respective heads 19 and 20. Similarly, T2(+15) and T2(-15) represent recorded tracks scanned by their respective heads 22 and 21. The track width is 19.3 µm for T1(+6) and T1(-6) and 10µm for T2(+15) and T2(-15).

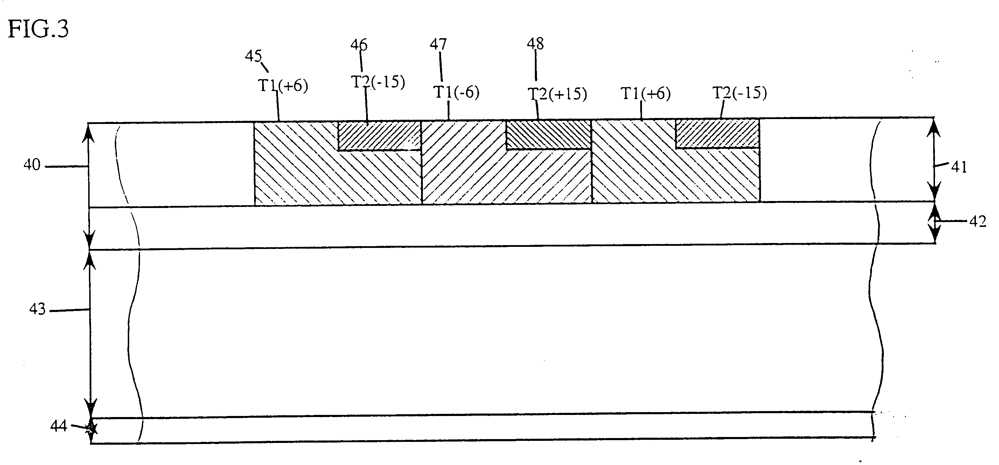

Fig. 3 is a cross sectional view of the magnetic recording tape in which shown are a magnetic layer 40, a signal recording layer 41, a signal not-recording layer 42, a base film 43, and a back coating 44. As shown, the recording tracks are denoted T1(+6) by 45, T2(-15) by 46, T1(-6) by 47, and T2(+15) by 48. Since the level of recorded signals stored in T2(+15) and T2(-15) is low, recording tracks are in a shallow and near-surface area of the magnetic recording tape.

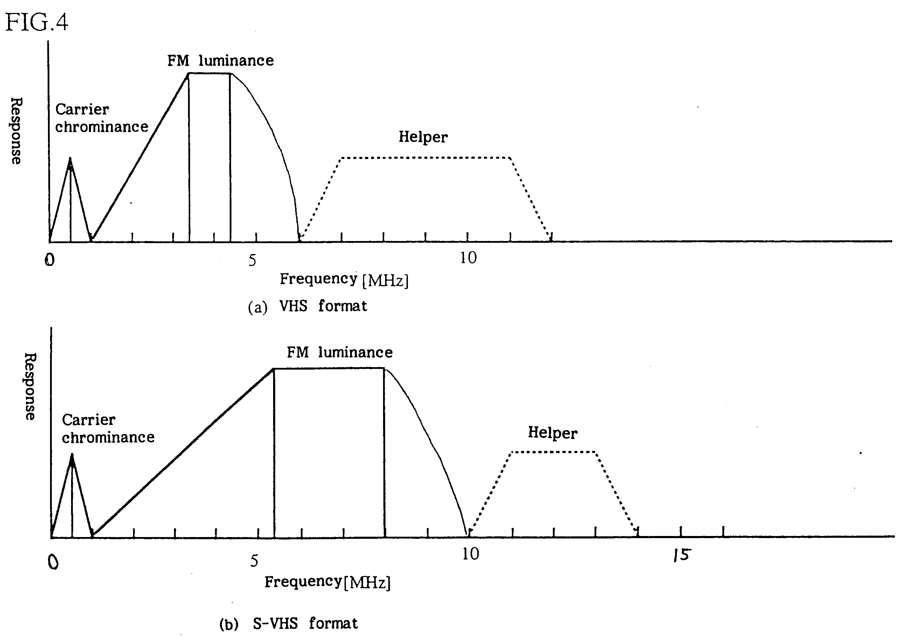

Figs. 4(a) and 4(b) show frequency spectrums according to the first embodiment of the present invention. Fig. 4(a) illustrates the spectrum of a frequency band of the present invention for use with a conventional VHS-format VCR, in which the FM luminance signal has a frequency bandwidth between 1 MHz and 6 MHz substantially and does not extends over 6 MHz. Hence, the helper signal of the PALplus signal is recorded and reproduced between 6 MHz and 12 MHz. For recording and reproducing the PALplus helper signal at acceptable levels, the C/N ratio of a playback carrier should be about 35 dB (at a noise frequency band of 30 kHz). We, the applicants, found through various experiments that the C/N ratio of a digital chrominance signal when recording onto an S-VHS recording tape was measured more than 35 dB while the conventional VHS signal declined less than 1 dB in the C/N ratio. If the reproduction signal drops 2 dB, the noise level is attenuated in proportion and thus, a decrease in the C/N ratio will be a half or 1 dB. Also, if the PALplus helper signal overlaps the FM luminance signal in the frequency band, an azimuth loss between the recording tracks will eliminate the interference of crosstalk. Although the bandwidth of the PALplus signal in the first embodiment is between 6 MHz and 12 MHz, the effect of azimuth loss will allow both the FM luminance signal and the PALplus helper signal to share a specific range of 2 MHz to 4 MHz.

Fig. 4(b) illustrates the spectrum of a frequency band of an S-VHS signal in a VCR, similar to that of the VHS signal. The bandwidth of the FM luminance signal extends from 1 MHz to 10 MHz leaving free the frequency range of over 10 MHz. Hence, the PALplus helper signal is assigned to a higher range of 10 MHz to 14 MHz. The bandwidth of the helper signal may however be allocated to a range from 2 MHz to 5 MHz or from 6 MHz to 12 MHz identical to that for the VHS signal with equal success where the FM luminance signal can share with the PALplus helper signal because of the effect of azimuth loss.

In reproduction, the outputs of the two magnetic heads 19 and 20 are fed through the rotary transformer to a reproducing head amplifier 23 for amplification. Simultaneously, the outputs of the other two heads 21,22 are transferred through the rotary transformer to a reproducing head amplifier 29 for amplification.

The output of the reproducing amplifier 23 is fed to a bandpass filter (BPF) 24 where the FM luminance signal is extracted. The FM luminance signal is then demodulated by a demodulator circuit 25 to the baseband signal which is deemphasized by a deemphasizer circuit 26. Also, the output of the reproducing head amplifier 23 is fed to another bandpass filter 27 where the carrier chrominance signal is extracted. The carrier chrominance signal is then converted back by a frequency converter circuit 28 to the original frequency of the PAL or SECAM system.

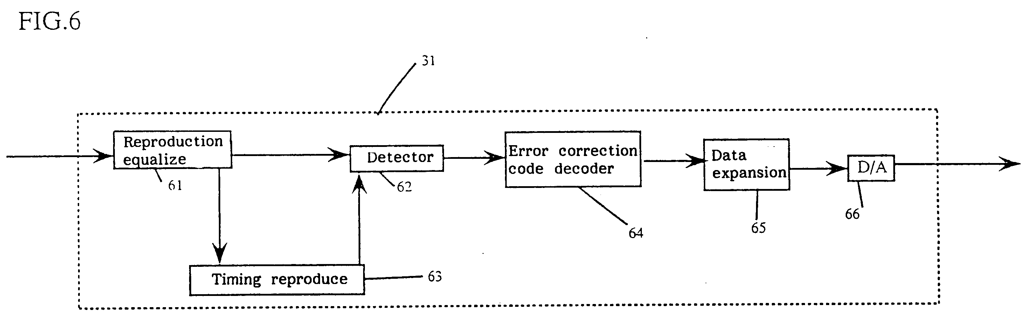

The output of the reproducing head amplifier 29 is transmitted to a bandpass filter 30 where the PALplus helper signal is extracted. The PALplus helper signal is then converted by the digital signal separation and processing action of a digital reproduced signal processing circuit 31 to its analog form. The arrangement of the digital reproduced signal processing circuit 31 will be explained in more detail referring to Fig. 6. Illustrated in Fig. 6 are a reproducing equalizer 61, a detector circuit 62, a timing reproducing circuit 63, an error correction code decoder circuit 64, a data expanding circuit 65, and a digital-to-analog (D/A) converter circuit 66. The output of the bandpass filter 30 is first fed to the reproducing equalizer 61 for waveform equalization. At the timing reproducing circuit 63, a clock signal for extraction of detection points is produced from the output of the reproducing equalizer 61. The timing reproducing circuit 63 may simply be a PLL circuit or the like. The timing reproducing circuit 63 may also contain a TBC (Time Base Convertor) circuit for reproducing a high quality data with elimination of analog jitters. The detector circuit 62 detects a digital data from the output of the reproducing equalizer 61 in response to a clock signal from the timing reproducing circuit 63. The digital data from the detector circuit 62 is processed by the error correcting code decoding circuit 64 for error data correcting and transmitted to the data expanding circuit 65. Since digital data output from the error correcting code decoding circuit 64 is compressed information, the digital data expanded by the data expanding circuit 65 before delivered to the digital-to-analog converter circuit 66. The digital data is converted back by the digital-to-analog converter circuit 66 to its analog form of the PALplus helper signal which is then transmitted further to a modulator circuit 115 and to a timing controller circuit 132. The modulator circuit 115 modulates the input baseband helper signal using a color subcarrier and sends it to a timing controller 131. The timing controller 131 controls the timing between the PAL signal and the PALplus helper signal so that the helper signal appears in two, upper and lower, 72-lines areas of the effective picture screen and then, the PALplus helper signal is delivered further through an output terminal 117.

The output or reproduced luminance signal Y from the deemphasis circuit 26 and the output or reproduced chroma carrier signal C from the frequency converter circuit 28 are summed by an adder 37 to a sum signal which is further transmitted from an output terminal 38. Simultaneously, the reproduced luminance signal Y from the deemphasis circuit 26 and the reproduced carrier chrominance signal C from the frequency converter circuit 28 are distributed as component signals to two output terminals 39 respectively. The sum signal of the adder 37 is also fed to the timing controller circuit 132 where the timing between the PAL signal and the helper signal is controlled by the sum signal so that the helper signal appears in two, upper and lower, 72-lines areas of the effective picture screen. As the result, the PAL signal is delivered to an output terminal 133 while the baseband helper signal is transmitted to an output terminal 134.

It would be understood that the output of the recording amplifier 14 can be set to a saturated recording level which allows the recording currents of the two heads 21,22 to produce a maximum reproduced output from the recording tape and recorded on separate tracks of the recording tape. In this case, the recording tracks will be reduced in the width than those of the first embodiment.

Also, the recording tape or medium may be formed of layers of magnetic materials which are different from one another in coercive force in the thicknesswise direction.

In addition, using a reproducing signal head having track width which is identical to track width of the second recording signal produces a reproduced signal with less noise.

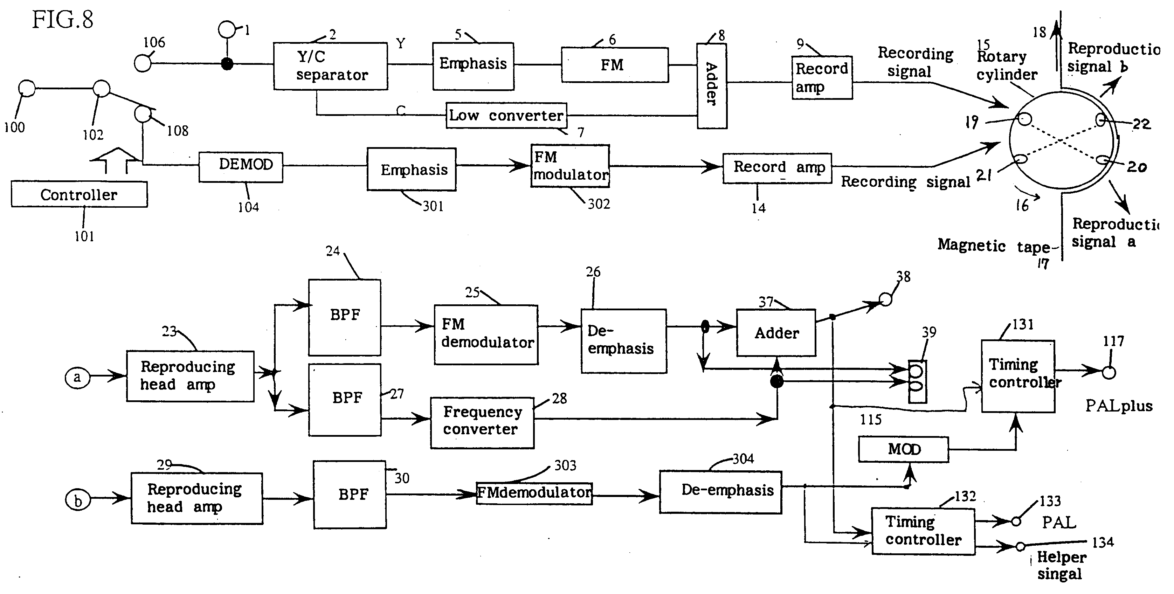

A second embodiment of the present invention will now be described referring to the relevant drawings. Fig. 8 is a block diagram showing a primary part of the second embodiment. The second embodiment is differed from the first embodiment by the fact that the recording signal processing of the helper signal is carried out not in a digital format but through the frequency modulation. Hence, the only detail which is distinguished from the first embodiment will be explained.

As shown in Fig. 8, there are specifically provided an emphasizer circuit 301, an FM modulator circuit 302, a FM demodulator circuit 303, and a deemphasizer circuit 304.

An helper signal fed selectively to a contact 108 is identical to that of the first embodiment. The helper signal which is demodulated by a demodulator circuit 104 is linearly or nonlinearly emphasized by the emphasizer circuit 301, FM modulated by the FM modulator circuit 302, and delivered to a recording amplifier 14.

In reproduction, the reproduced output of a first bandpass filter 30 is FM demodulated by the FM demodulator circuit 303, deemphasized by the deemphasizer circuit 304, and transmitted to a modulator (MOD) circuit 115 and to a timing controller circuit 132.

It would also be understood that the output of the recording amplifier 14 can be set to a saturated recording level which allows the recording current of two heads 21,22 to produce a maximum reproduced output from a magnetic recording tape and recorded on separate tracks of the recording tape. In this case, the recording tracks will be reduced in the width than those of the second embodiment.

In addition, the recording tape or medium may be formed of layers of magnetic materials which are different from each other in coercive froce in the thicknesswise direction.

Also, a reproducing head having track width which is identical to the recording track width of the second recording signal produces a reproduced signal with less noise, similar to that of the first embodiment.

Accordingly, the present invention provides a color video signal recording/reproducing VCR in which the helper signal is digitized and overlap recorded with a separate head onto a part or all of the recording track where conventional color video signal is stored. As the result, the helper signal can be stored along with the conventional PAL or SECAM signal in allotments and thus, its PALplus content and the PAL or SECAM signal will selectively be retrieved either or both. Also, the magnetic recording tape carrying the signals recorded by the VCR of the present invention can be reproduced by the convention VCR because the conventional PAL or SECAM signals are recorded on the magnetic recording tape, and the VCR of the present invention will thus be compatible with any conventional VCR.

## Claims

1. A magnetic recording apparatus for recording a video signal added with a helper signal, comprising:
a selector switch for receiving a color television signal added with a vertical highband helper signal for a luminance signal and selectively transmitting the vertical highband helper signal for the luminance signal to a demodulator circuit and the other signal to a Y/C separator circuit;
the Y/C separator circuit for separating an input color video signal into the luminance signal and a carrier chrominance signal;
a frequency modulator circuit for frequency modulating the luminance signal from the Y/C separator circuit;
a lowband converter circuit for frequency converting a lowband of the carrier chrominance signal from the Y/C separator circuit;
an adder circuit for summing a frequency modulated luminance signal and a lowband converted chrominance signal;
a first magnetic head for recording an output color video signal of the adder circuit onto a magnetic recording medium;
the demodulator circuit for demodulating the vertical highband helper signal;
a recording signal converter circuit for converting an output of the demodulator circuit or the vertical highband helper signal from the selector switch to its recordable equivalent;
a recording amplifier for converting the recordable output of the recording signal converter to a recording current; and
a second magnetic head for recording the recordable output of the recording signal converter so as to overlap at least a part of the recording track produced by the first magnetic head.

2. A magnetic recording apparatus according to Claim 1, wherein the recording signal converter is a digital recording signal processor circuit for digitizing and encoding a signal to a digital modulation code form.

3. A magnetic recording apparatus according to Claim 2, wherein the digital recording signal processor circuit comprises:
an analog-to-digital converter for converting the helper signal of the demodulator circuit to its digital equivalent;
a data compressing circuit for compressing the data of the digital output of the analog-to-digital converter;
an error correcting code encoder circuit for adding an error correction parity to the data compressed signal; and
a recording code encoder circuit for converting the data compressed signal accompanied with the error correction parity to a digital code form.

4. A magnetic recording apparatus according to Claim 1, wherein the recording signal converter circuit comprises an emphasizer circuit for enhancing the signal-to-noise ratio and a frequency modulator circuit for producing an analog frequency modulated signal.

5. A magnetic recording apparatus according to Claim 1, wherein the recording medium is a magnetic tape formed of layers of magnetic materials which are different in coercive force in the thicknesswise direction.

6. A magnetic recording apparatus according to Claim 1, wherein the first magnetic head is consisted of two magnetic heads arranged 180 degrees apart from each other on a rotary cylinder in almost symmetrical relationship and having opposite azimuth angles to each other.

7. A magnetic recording apparatus according to Claim 1, wherein the recording amplifier produces an optimum recording current appropriated for reproduction of a maximum reproduction output.

8. A magnetic recording apparatus according to Claim 1, wherein the recording amplifier produces a recording current smaller than the optimum recording current.

9. A magnetic recording apparatus according to Claim 1, wherein the controller for the selector switch conducts the transmission of the input signal to the demodulator circuit for the first period, 72/625x1/50=0.002304 seconds of a vertical blanking of 1/50=0.02 seconds, after the start of effective screen line scanning (in a television picture display), to the Y/C separator circuit for a succeeding period of 432/625x1/50=0.013824 seconds, to the demodulator circuit for another period of 72/625x1/50=0.02304 seconds, and to the Y/C separator circuit for the last period of 49/623x1/50=0.001568 seconds.

10. A magnetic reproducing apparatus for reproducing a video signal added with a helper signal, comprising:
a reproducing head amplifier for amplifying a reproduced output of a second magnetic head;
a first filter for extracting a luminance signal from a reproduced output of a first magnetic head;
a frequency demodulator circuit for frequency demodulating an output of the first filter;
a second filter for extracting a lowband converted chrominance signal from the reproduced output of the first magnetic head;
a frequency converter circuit for changing a frequency of an output of the second filter;
an adder circuit for summing an output of the frequency demodulator circuit and an output of the frequency converter;
a third filter for extracting the helper signal from an output of the reproducing head amplifier;
a reproduced signal processor circuit for processing the helper signal and transmitting the helper signal to a modulator circuit and to a second timing controller circuit;
the modulator circuit modulating an output of the reproduced signal processor circuit with a color subcarrier;
a first timing controller circuit controlling the timing between an output of the adder circuit and an output of the modulator circuit; and
an output terminal for transmitting a PALplus component derived from the first timing controller circuit.

11. A magnetic reproducing apparatus according to Claim 10, wherein the reproduced signal processor circuit is a digital reproduced signal processor in which the output of the reproducing amplifier is digitally processed to reproduce an analog helper signal.

12. A magnetic reproducing apparatus according to Claim 11, wherein the digital reproduced signal processor circuit comprises:
a reproducing equalizer for equalizing the reproduced signal;
a timing reproducing circuit for recovering a clock signal from an output of the reproducing equalizer;
a detector circuit for extracting a digital data from the output of the reproducing equalizer using the clock signal;
an error correcting code decoder circuit for correcting errors in the digital data of the detector circuit;
a data expanding circuit for expanding the digital data from the error correction code decoder circuit; and
a digital-to-analog converter for converting the digital data output of the data expanding circuit to its analog equivalent.

13. A magnetic reproducing apparatus according to Claim 10, wherein the reproduced signal processor circuit comprises:
a frequency demodulator circuit for frequency demodulating the reproduced signal from the reproducing amplifier; and
a deemphasizer circuit for deemphasizing an output of the frequency demodulator circuit.

14. A magnetic reproducing apparatus according to Claim 10, further comprising a third magnetic head which is subjected to the recording track width of a recorded signal derived from the recording signal converter circuit.

15. A magnetic reproducing apparatus according to Claim 10, wherein the second timing controller circuit controls the timing between the output of the adder circuit and the an output of the reproduced signal processor circuit to recover a PAL signal and a baseband helper signal which are then transmitted further from a second output terminal.

16. A magnetic recording/reproducing apparatus for recording and reproducing a video signal added with a helper signal, comprising:
a selector switch for receiving a color television signal added with a vertical highband helper signal for a luminance signal and selectively transmitting the vertical highband helper signal for the liminance signal to a demodulator circuit and the other signal to a Y/C separator circuit;
the Y/C separator circuit for separating an input color video signal into the luminance signal and a carrier chrominance signal;
a frequency modulator circuit for frequency modulating the luminance signal from the Y/C separator circuit;
a lowband converter circuit for frequency converting a lowband of the carrier chrominance signal from the Y/C separator circuit;
a first adder circuit for summing a frequency modulated luminance signal and a lowband converted chrominance signal;
a first magnetic head for recording and reproducing an output color video signal of the first adder circuit on a magnetic recording medium;
the demodulator circuit for demodulating the vertical highband helper signal;
a recording signal converter circuit for converting an output of the demodulator circuit or the vertical highband helper signal from the selector switch to its recording equivalent;
a recording amplifier for converting the recordable output of the recording signal converter to a recording current;
a second magnetic head for recording recordable output of the recording signal converter so as to overlap at least a part of the recording track produced by the first magnetic head and reproducing the same;
a reproducing head amplifier for amplifying a reproduced output of the second magnetic head;
a first filter for extracting the luminance signal from a reproduced output of the first magnetic head;
a frequency demodulator circuit for frequency demodulating an output of the first filter;
a second filter for extracting the lowband converted chrominance signal from the reproduced output of the first magnetic head;
a frequency converter circuit for changing a frequency of an output of the second filter;
a second adder circuit for summing an output of the frequency demodulator circuit and an output of the frequency converter;
a third filter for extracting the helper signal from an output of the reproducing head amplifier;
a reproduced signal processor circuit for processing the helper signal and transmitting the helper signal to a modulator circuit and to a second timing controller circuit;
the modulator circuit modulating an output of the reproduced signal processor circuit with a color subcarrier;
a first timing controller circuit controlling the timing between an output of the second adder circuit and an output of the modulator circuit; and
an output terminal for transmitting a PALplus component derived from the first timing controller circuit.
